# EUROPEAN PATENT SPECIFICATION

(11) **EP 3 150 838 B1**
(45) Date of publication and mention of the grant of the patent: **12.09.2018**
(21) Application number: 16190986.6
(22) Date of filing: 28.09.2016
(51) Int. Cl.: F02M 35/024, F02M 35/10, F02M 35/02, B01D 46/00, F02M 35/16, B01D 46/10, B01D 46/52

(54) **AIR CLEANER DEVICE**
LUFTREINIGUNGSVORRICHTUNG
DISPOSITIF DE PURIFICATION DE L'AIR

(30) Priority: 30.09.2015 JP 2015194951
(43) Date of publication of application: 05.04.2017
(73) Proprietor: Honda Motor Co., Ltd., Minato-ku Tokyo 107-8556 (JP)
(72) Inventor: SANO, Takahiro, SAITAMA, 351-0193 (JP)
(74) Representative: Brevalex

(56) References cited:
- EP-A1- 1 403 507
- EP-A1- 2 141 067
- EP-A2- 1 526 273
- WO-A1-2011/094334
- WO-A1-2014/040658
- CA-A1- 2 638 002
- DE-A1- 3 232 583
- DE-A1-102014 011 932
- DE-U1-202006 010 888
- JP-A- H0 886 255
- JP-A- 2010 236 361

## Description

### Technical Field

The present invention relates to an air cleaner device, and more particularly to an air cleaner device that is capable of rectifying air flows therein.

### Background Art

With regard to the structure of air cleaner devices for use on conventional saddle-type vehicles such as motorcycles or the like, there has been known a technology wherein a separate guide member for deflecting air flows is provided in an air cleaner case to increase the performance of air intake characteristics on the basis of a rectifying effect on the air flows (see, for example, Patent Document 1).

### Description of the Prior Art

Patent Document 1 - Japanese Patent Laid-Open No. 2010-236361
Patent Document 2 - DE3232583 A1

### Summary of the Invention

### Problems to be Solved by the Invention

According to the technology disclosed in Patent Document 1, as the guide member is separate from the air cleaner case, the number of parts used is large. Depending on the shape of the air cleaner case, the guide member may not be provided, and depending on the position where the guide member is installed, the shape of the air cleaner case may have to be changed to a large extent, possibly resulting in a wide range of design changes to be made. Patent Document 2 also discloses an air cleaner device having features corresponding to known features of the invention.

The present invention has been made in view of the situation described above. It is an object of the present invention to provide an air cleaner device capable of rectifying air flows therein without involving an increase in the number of parts used and without making significant design changes of the air cleaner device.

### Means for Solving the Problems

To accomplish the above object, there is provided in accordance with an invention recited in claim 1 air cleaner device for an engine of a saddle-type vehicle, the air cleaner device including an air cleaner case provided with an air introducer, and an air discharger disposed in a lower portion of the air cleaner case, and a foreign matter remover disposed in the air cleaner case for removing foreign matter from air in an air flow path that extends from the air introducer to the air discharger, the air cleaner case housing therein a support supporting the foreign matter remover, the support being integrally formed with an air deflection guide that extends in the air flow path for deflecting the direction of an air flow, the air deflection guide including an upper guide member, a central guide member and a lower guide member, the guide members being of a plate-like shape extending across the air flow path and lying substantially parallel to each other, with adjacent ones of the guide members spaced from each other by substantially the same distances, the guide members being further juxtaposed obliquely vertically as viewed in side elevation and being inclined in such a direction that a downstream of the guide members is directed away from the air discharger as viewed in side elevation, wherein the overall length of the central guide member disposed in a lower position is shorter than the overall length of the upper guide member disposed in an uppermost position, and the overall length of the lower guide member disposed below the central guide member is further shorter than the overall length of the central guide member.

According to an invention recited in claim 2, the foreign matter remover is disposed on a one-side end surface of the support with respect to the direction of the air flow, and the air deflection guide extends from the one-side end surface and projects from other-side end surface of the support, as viewed in side elevation.

According to an invention recited in claim 3, one of the guide members disposed in a lower position has an end near the foreign matter remover, the end being offset upstream of another of guide members disposed in an upper position with respect to the air flow.

According to an invention recited in claim 4, the air deflection guide is integrally formed with a vertical-plate guide member extending across the guide members.

### Effects of the Invention

According to the invention recited in claim 1, since the support provided in the air cleaner case is integrally formed with the air deflection guide that extends in the air flow path for deflecting the air flow, the air deflection guide is added without making significant changes in the shape of the air cleaner case, but with a minimum of design change, compared with the conventional technology wherein the guide member for deflecting air flows is assembled in the air cleaner case.

As the air deflection guide is of a plate-like shape extending across the air flow path and is inclined in such a direction that the downstream of the air deflection guide is away from the air discharger as viewed in side elevation, the air deflection guide deflects part of the air flow introduced from the air introducer into a detouring deflected flow spaced from the air discharger, thereby forming a largely curved flow by effectively utilizing the space in the air cleaner case. Consequently, the air is prevented from becoming stagnant, increasing the performance of air intake characteristics.

Because the air deflection guide has the plural guide members lying substantially parallel to each other, the intervals between the guide members can be set to appropriate values to adjust the flow rate of the air to be deflected. As the guide members lie substantially parallel to each other, the support can easily be removed from its molding assembly when the support is molded.

As the guide members include at least three guide members, and adjacent ones of the guide members are spaced from each other by substantially the same distances, so that an air flow balance can be achieved as viewed in side elevation.

As the guide members are juxtaposed obliquely vertically as viewed in side elevation, and the overall lengths of those of the guide members disposed in the lower positions are shorter than the overall length of the other guide member disposed in the uppermost position, therefore, the resistance to the air that passes between the guide members is reduced across the lower guide members. As a consequence, the air flow curved toward the air discharger disposed in the lower region of the air cleaner case undergoes a reduced resistance on an inner side of the curved air flow, making it easier for the air to flow. Consequently, the air intake characteristics are prevented from being lowered.

Inasmuch as the foreign matter remover is disposed on the one-side end surface of the support with respect to the direction of the air flow, and the air deflection guide extends forwardly from the one-side end surface and projects from the other-side end surface, as viewed in side elevation, the air deflection guide is dimensionally increased. As a result, the degree of freedom with which to adjust the deflected direction of the air and the flow rate of the deflected air is increased.

Where the guide member in the lower position has the end near the foreign matter remover, the end being offset upstream of the guide member disposed in the upper position with respect to the air flow, it is possible to improve the air intake balance between near and far sides in the air discharger with respect to the support.

If the air deflection guide is integrally formed with the vertical-plate guide member extending across the guide members, the flow rate of the deflected air flow is balanced in the widthwise directions (leftward-rightward directions) of the air deflection guide. The vertical-plate guide member is effective to reinforce the air deflection guide and the support.

### Brief Description of the Drawings

FIG. 1 is a left side elevational view of a motorcycle as a saddle-type vehicle according to the present invention.
FIG. 2 is a schematic view showing an air intake path in the motorcycle shown in FIG. 1.
FIG. 3 is a front elevational view of an air cleaner case from which a front case member is detached, as viewed from front.
FIG. 4 is a plan view of the air cleaner case from which an upper case member and a lid case member are detached, as viewed from above.
FIG. 5 is a perspective view of a support member and a foreign matter remover in the air cleaner case shown in FIG. 4.
FIG. 6 is a rear elevational view of the support member provided with an air deflection guide, as viewed from behind.
FIG. 7 is a cross-sectional view taken along line A-A of FIG. 6 and a schematic view showing a positional relationship with an air discharger.
FIG. 8 is a view showing a pressure distribution in an air flow path in which an air flow is deflected.
FIG. 9 is a view showing a pressure distribution in the air flow path in which an air flow is not deflected.

### Modes for Carrying Out the Invention

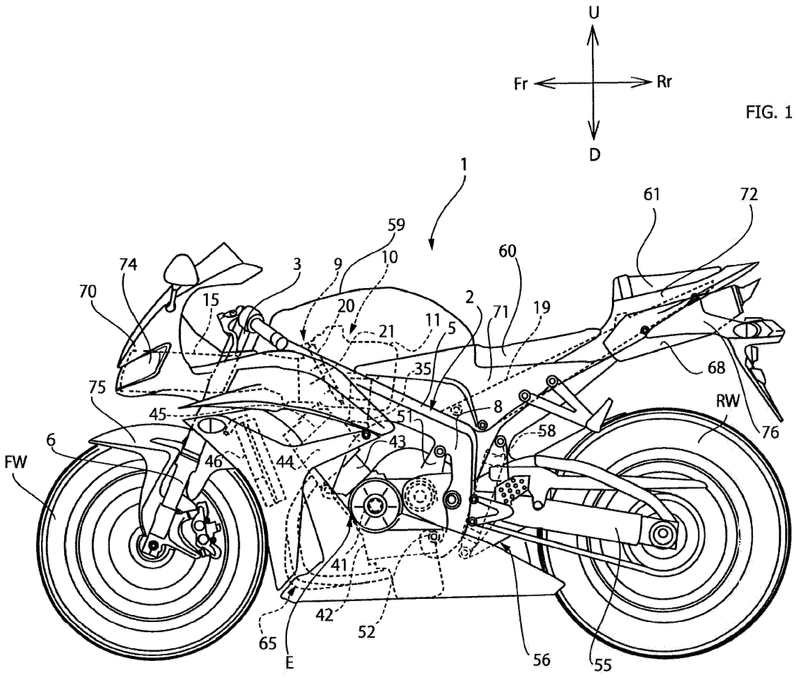

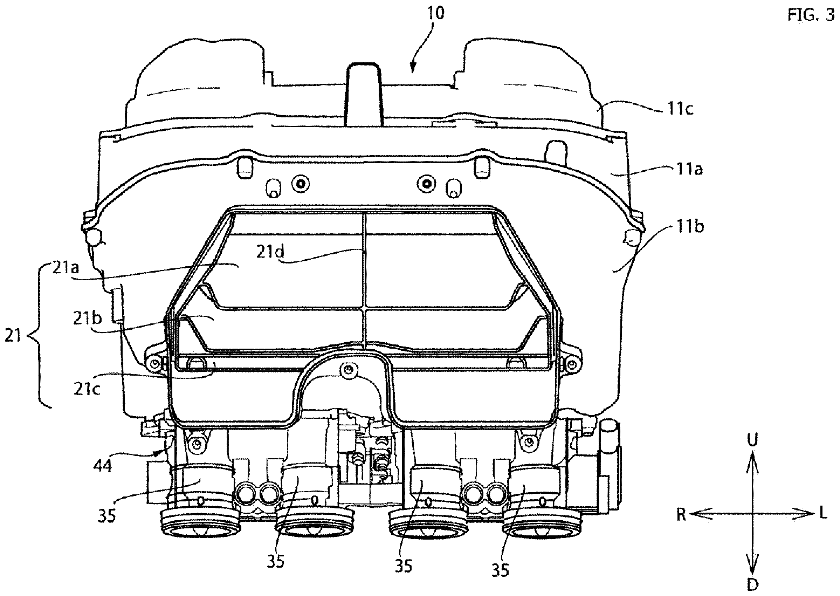

A motorcycle as a saddle-type vehicle according to an embodiment of the present invention will be described below with reference to FIGS. 1 through 9. The drawings shall be viewed in accordance with the orientation of reference characters. In the description that follows, front and rear, left and right, and up and down are referred to as directions as viewed from the driver, and a forward direction of the vehicle is represented by Fr, a rearward direction by Rr, a leftward direction by L, a rightward direction R, an upward direction by U, and a downward direction by D in the drawings. With respect to parts detached from the vehicle, orientations thereof at the time they are installed will be referred to.

As shown in FIG. 1, a motorcycle 1 has a vehicle body frame 2 including a head pipe 3 by which a front fork 6 supporting a front wheel FW is steerably supported, a pair of left and right main frames 5 extending rearwardly and downwardly from the head pipe 3, a pair of left and right pivot frames 8 joined integrally to and extending downwardly from rear portions of the main frames 5, and a pair of left and right seat rails 19 extending rearwardly and upwardly from the rear portions of the main frames 5.

A water-cooled internal combustion engine E is supported below the main frames 5 by an upper hanger 51 provided on the rear portions of the main frames 5 of the vehicle body frame 2 and a lower hanger 52 provided on lower portions of the pivot frames 8. A rear wheel RW driven by power of the internal combustion engine E is supported on a rear end of a swing arm 55 whose front end is vertically swingably supported on the lower portions of the pivot frames 8. A link mechanism 56 is provided between a front portion of the swing arm 55 and the lower portions of the pivot frames 8. A rear cushion unit 58 is provided between the link mechanism 56 and an upper portion of the swing arm 55.

A fuel tank 59 is mounted on the main frames 5 upwardly of the internal combustion engine E, and a riding front seat 60 disposed rearwardly of the fuel tank 59 and a riding rear seat 61 disposed further rearwardly of the riding front seat 60 are supported on the seat rails 19.

The internal combustion engine E has a crankcase 42 in which a crankshaft 41 having an axis extending in the widthwise directions of the vehicle body frame 2 is rotatably supported, a cylinder block 43 extending forwardly and upwardly from the upper end of a front portion of the crankcase 42, a cylinder head 44 coupled to the upper end of the cylinder block 43, and a head cover 45 coupled to the upper end of the cylinder head 44. According to the present embodiment, the internal combustion engine E includes, for example, an in-line four-cylinder engine. A radiator 46 supported on a front portion of the vehicle body frame 2 is disposed forwardly of the internal combustion engine E and rearwardly of the front wheel FW.

An air intake system 9 connected to a side surface of a rear portion of the cylinder head 44 includes an air cleaner device 10 covered by the fuel tank 59, an air inlet channel 15 open in a front vehicle body portion for introducing air into the air cleaner device 10, and throttle bodies 35 interposed between the air cleaner 10 and the cylinder head 44 for the respective four cylinders. An exhaust system 65 connected to a side surface of a front portion of the cylinder head 44 includes an exhaust muffler 68 at its rear end, the exhaust muffler 68 being disposed upwardly of the rear wheel RW.

According to the present embodiment, the motorcycle 1 has, as cover members, a front cowl 70 having a headlight 74, etc. on its front surface, a side cover 71 covering lower portions of the fuel tank 59 and the riding front seat 60, a rear cowl 72 covering lower sides of the riding front seat 60 and the riding rear seat 61, a front fender 75 covering an upper portion of the front wheel FW, and a rear fender 76 covering an upper portion of the rear wheel RW.

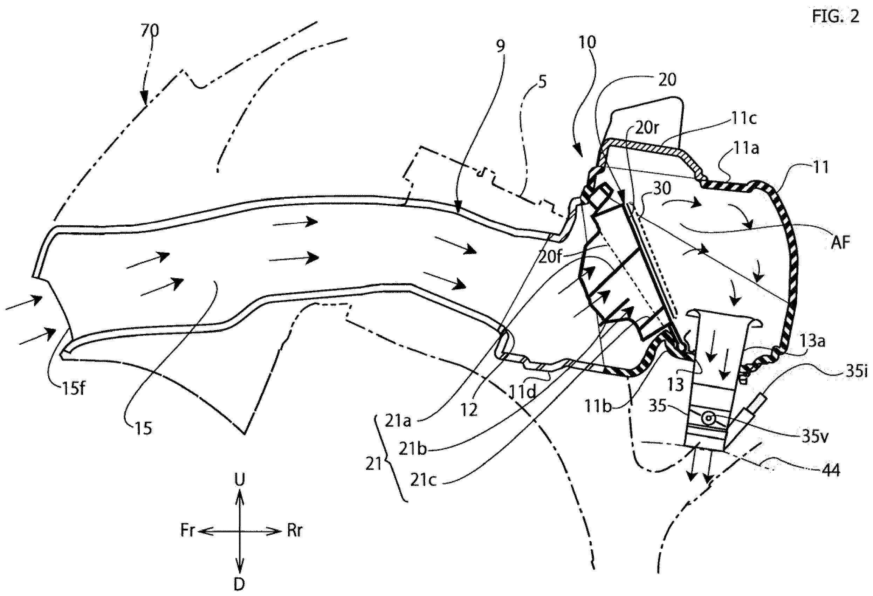

As shown in FIG. 2, an air cleaner case 11 has an air introducer 12 for introducing air, disposed in a front portion thereof and held in fluid communication with the air inlet channel 15, and air dischargers 13 disposed in a rear lower portion thereof and held in fluid communication with the cylinder head 44. The air inlet channel 15 has a front opening 15f that is open between a pair of left and right headlights 74, for example. Although the structure of the air inlet channel 15 will not be described in detail, it has divided left and right passageways in order to stay clear of the head pipe 3, etc.

Funnels 13a held in fluid communication with the throttle bodies 35, each having a throttle valve 35v and an injector 35i, are joined to the respective air dischargers 13. The air cleaner case 11 thus constructed creates an air flow path AF therein which is bent largely so that air introduced therein from front will be discharged downwardly.

As shown in FIG. 2, the air cleaner case 11 has an inner space defined by an upper case member 11a, a lower case member 11b, a lid case member 11c, and a front case member 11d. The air introducer 12 held in fluid communication with the air inlet channel 15 is open forwardly in the front case member 11d. In the lower case member 11b, there are four air dischargers 13 directed downwardly and juxtaposed in leftward-rightward directions. The throttle bodies 35 that extend substantially vertically are disposed in the respective air dischargers 13. The lid case member 11c is constructed such that it can be opened and closed for the maintenance of the inside of the air cleaner case 11.

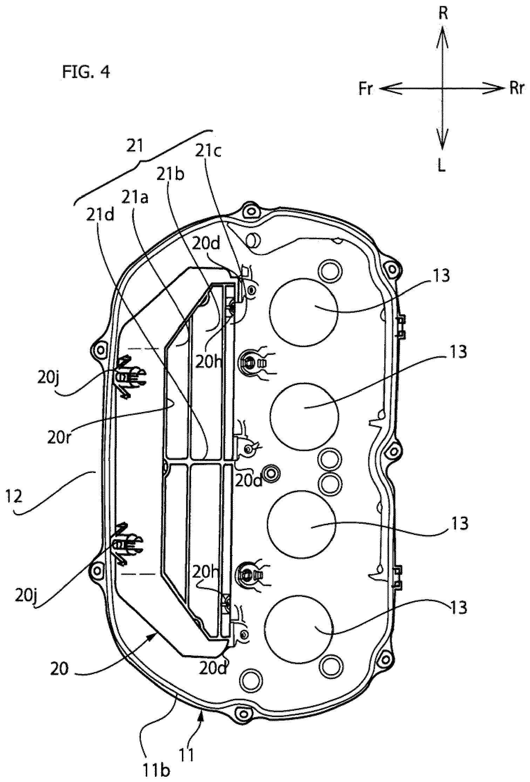

As shown in FIG. 4, the air cleaner case 11 houses therein a support 20 supporting a foreign matter remover 30 and disposed on the lower case member 11b between the air introducer 12 and the air dischargers 13. The support 20 includes an air deflection guide 21 integrally formed therewith, as described later. The support 20 has three engaging teeth 20d extending downwardly and engaging and positioned on a case bottom of the lower case member 11b, and upper frame fixtures 20j fixed to a front case portion of the lower case member 11b by screws. The support 20 is disposed such that an upper portion thereof is inclined forwardly (see FIG. 2).

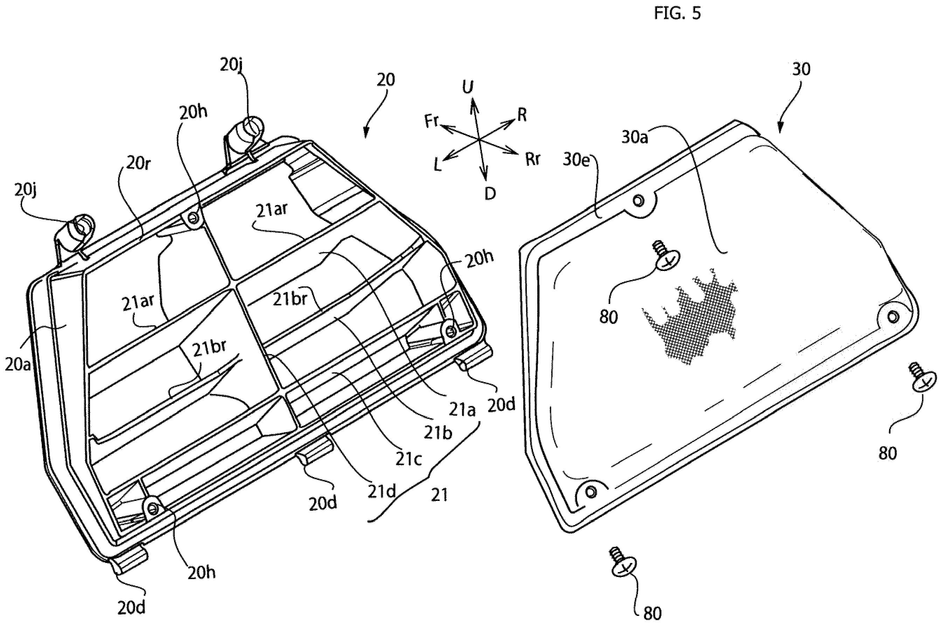

Although not shown in FIG. 4, the foreign matter remover 30 is mounted on a downstream end surface 20r of the support 20, as shown in FIG. 5. The foreign matter remover 30 is arranged to remove foreign matter from the air that has flown in from the air introducer 12. The foreign matter remover 30 includes a mesh-like foreign matter removing surface 30a and an edge 30e surrounding the foreign matter removing surface 30a. The foreign matter remover 30 is disposed on the downstream end surface 20r of a frame 20a of the support 20 and secured in place by attachment screws 80 that are threaded into mount bosses 20h on the frame 20a of the support 20.

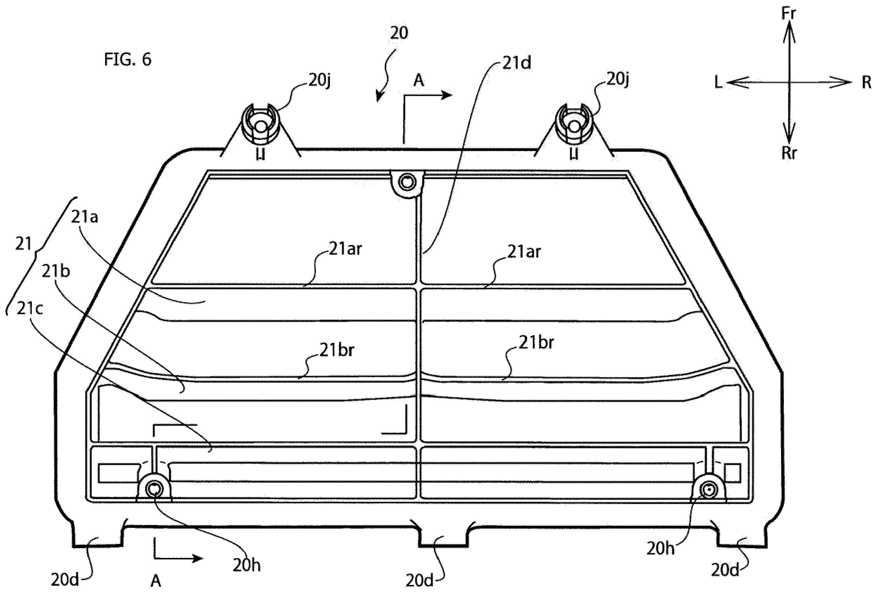

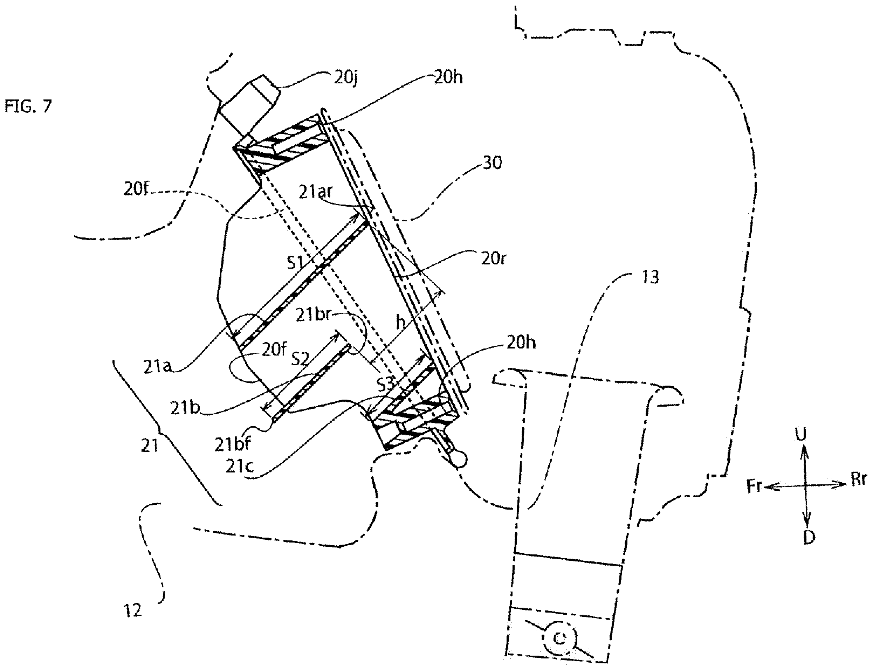

As shown in FIGS. 6 and 7, the support 20 is integrally formed with the air deflection guide 21 that extends into the air flow path AF (see FIG. 2) for deflecting the direction of an air flow. The air deflection guide 21 extends in the leftward-rightward directions across the air flow path AF, and includes three plate-like guide members, i.e., an upper guide member 21a, a central guide member 21b, and a lower guide member 21c, which are juxtaposed vertically. The upper guide member 21a, the central guide member 21b, and the lower guide member 21c are inclined in such a direction that downstream thereof are away from the air discharger 13, i.e., inclined obliquely upwardly, as viewed in side elevation.

The upper guide member 21a, the central guide member 21b, and the lower guide member 21c lie substantially parallel to each other, and adjacent ones of them are spaced from each other by substantially the same distances. The air deflection guide 21 is integrally formed with a vertical-plate guide member 21d extending across the upper guide member 21a, the central guide member 21b, and the lower guide member 21c. The vertical-plate guide member 21d is disposed substantially centrally in the leftward-rightward directions, thereby reinforcing the support 20.

Of the upper guide member 21a, the central guide member 21b, and the lower guide member 21c, the upper guide member 21a and the central guide member 21b extend from the downstream end surface 20r on which the foreign matter remover 30 is disposed, and project from an upstream end surface 20f, as viewed in side elevation.

As viewed in side elevation, the overall length S2 of the central guide member 21b disposed in a lower position is shorter than the overall length S1 of the upper guide member 21a disposed in an uppermost position, and the overall length S3 of the lower guide member 21c disposed below the central guide member 21b is further shorter than the overall length S2 of the central guide member 21b.

The central guide member 21b has a downstream end near the foreign matter remover 30, the end being offset upstream of the upper guide member 21a disposed in the upper position with respect to the air flow. Specifically, as shown in FIG. 7, a lower rear end 21br of the lower-disposed central guide member 21b is positioned upstream of an upper rear end 21ar of the upper-disposed upper guide member 21a with respect to the air flow.

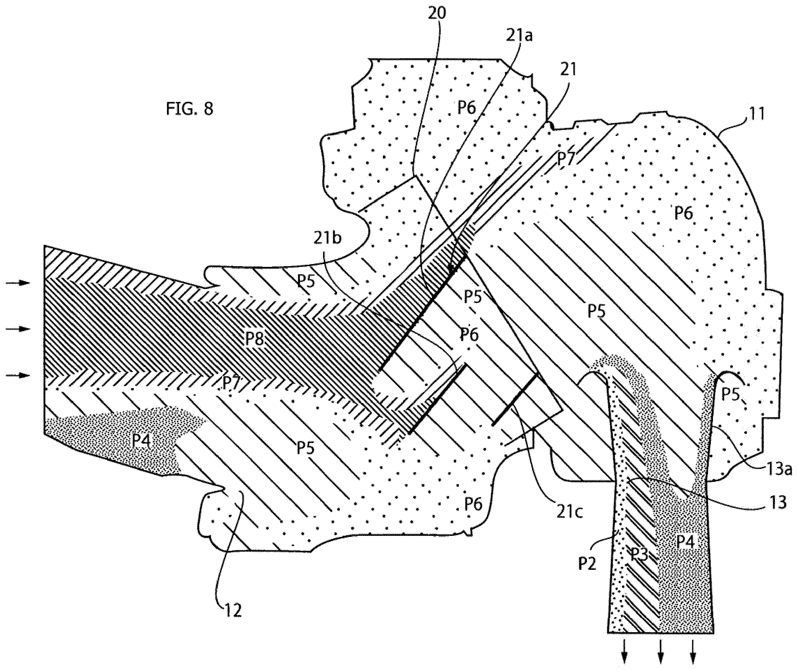

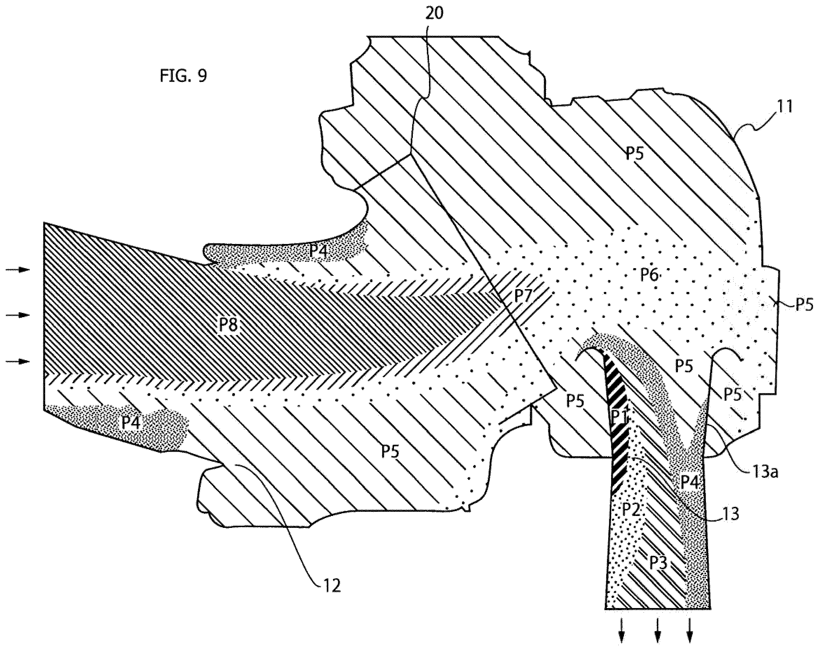

A simulation of air intake tests using the air cleaner device 10 which has the air deflection guide 21 according to the present invention will be described below. In the simulation, a pressure distribution of the air in the air cleaner case and the air flow path forward and rearward of the air cleaner case was measured under the conditions described below. The results of the tests are shown in FIGS. 8 and 9. FIG. 8 is a view showing the results of the test on an inventive example, illustrating a pressure distribution in case an air flow is deflected. FIG. 9 is a view showing the results of the test on a comparative example, illustrating a pressure distribution in case an air flow is not deflected.

The simulation was carried out under the following conditions:
(1) The internal combustion engine E includes a mid-displacement in-line four-cylinder engine.
(2) The shape of the air intake channel from the front of the vehicle body and the air cleaner case 11 (air flow path AF) is of the same structure as that shown in FIG. 2.
(3) The air deflection guide 21 has the three guide members 21a, 21b, and 21c that are juxtaposed vertically parallel to each other and inclined, with the downstream end of the central guide member 21b being offset upstream.
(4) The rotational speed of the internal combustion engine E is in a medium rotational speed range to a high rotational speed range.
(5) The support 20 has the air deflection guide 21 (three guide members 21a, 21b, and 21c) shown in FIG. 5, and the foreign matter remover 30 is disposed behind the support 20.

In the comparative example, the support 20 was free of the air deflection guide 21 and combined with the same foreign matter remover 30 as with the inventive example. The other details were exactly in the same conditions as with the inventive example.

Under the above conditions, pressure distributions in the respective air flow paths along which air is drawn from a region forward of the air introducer 12 into the four funnels 13a (air dischargers 13) were separately measured.

The pressure distributions shown in FIGS. 8 and 9 are represented in eight stages of pressures P1, P2, P3, P4, P5, P6, P7, and P8. The pressures are of magnitudes related to each to other as P1 < P2 < P3 < P4 < P5 < P6 < P7 < P8.

In the comparative example shown in FIG. 9, a high pressure area from the air flow path to a region directly above the funnel 13a (an area represented by the pressure distribution P8 → P7 → P6) is produced substantially straight in forward-rearward directions of the air cleaner case 11, and a low pressure area (an area represented by the pressure P1) is produced forwardly in the funnel 13a (left side in FIG. 9), making the intake air stagnant.

In the inventive example shown in FIG. 8, on the other hand, a high pressure area from the air flow path to a region directly above the funnel 13a (an area represented by the pressure distribution P8 → P7 → P6) is widely produced obliquely rearwardly in the air cleaner case 11.

Specifically, in the inventive example shown in FIG. 8, it is presumed that a detouring deflected flow spaced from the air discharger 13 is generated upwardly and rearwardly in the air cleaner case 11 owing to the air deflection guide 21 being provided. As a result, the low pressure area forward in the funnel 13a (the left side in FIG. 8) is reduced (the low pressure area indicated by P1 is eliminated), thus improving the air intake characteristics.

The tendencies of the pressure distributions shown in FIGS. 8 and 9 were similarly obtained even when the rotational speed of the internal combustion engine E varied. The tendencies of the pressure distributions were similar with respect to all of the four funnels.

According to the present embodiment, as described above, since the support 20 provided in the air cleaner case 11 is integrally formed with the air deflection guide 21 that extends in the air flow path AF for deflecting the air flow, the air deflection guide is added without making significant changes in the shape of the air cleaner case 11, but with a minimum of design change, compared with the conventional technology wherein the guide member for deflecting air flows is assembled in the air cleaner case.

According to the present embodiment, as the air deflection guide 21 is of a plate-like shape extending across the air flow path AF and is inclined in such a direction that the downstream of the air deflection guide 21 is away from the air discharger 13 as viewed in side elevation, the air deflection guide 21 deflects part of the air flow introduced from the air introducer 12 into a detouring deflected flow spaced from the air discharger 13, thereby forming a largely curved flow by effectively utilizing the space in the air cleaner case 11. Consequently, the air is prevented from becoming stagnant, increasing the performance of air intake characteristics.

According to the present embodiment, inasmuch as the foreign matter remover 30 is disposed on the downstream end surface 20r of the support 20 with respect to the direction of the air flow, and the air deflection guide 21 extends forwardly from the downstream end surface 20r and projects from the upstream end surface 20f, as viewed in side elevation, the air deflection guide 21 is dimensionally increased. As a result, the degree of freedom with which to adjust the deflected direction of the air and the flow rate of the deflected air is increased.

According to the present embodiment, because the air deflection guide 21 has the plural guide members 21a, 21b, and 21c lying substantially parallel to each other, the intervals between the guide members 21a, 21b, and 21c can be set to appropriate values to adjust the flow rate of the air to be deflected. As the guide members 21a, 21b, and 21c lie substantially parallel to each other, the support 20 can easily be removed from its molding assembly when the support 20 is molded.

According to the present embodiment, at least the three guide members 21a, 21b, and 21c are provided, and adjacent ones of the guide members 21a, 21b, and 21c are spaced from each other by substantially the same distances, so that an air flow balance can be achieved as viewed in side elevation.

According to the present embodiment, the guide members 21a, 21b, and 21c are juxtaposed obliquely vertically as viewed in side elevation, and the overall lengths of the central guide member 21b and the lower guide member 21c which are lower than the upper guide member 21a in the uppermost position are shorter than the overall length of the upper guide member 21a. Therefore, the resistance to the air that passes between the guide members 21a, 21b, and 21c is reduced across the lower guide members. As a consequence, the air flow curved toward the air discharger 13 disposed in the lower region of the air cleaner case 11 undergoes a reduced resistance on an inner side of the curved air flow, making it easier for the air to flow. Consequently, the air intake characteristics are prevented from being lowered.

According to the present embodiment, the central guide member 21b disposed in the lower position has the end near the foreign matter remover 30, the end being offset upstream, by a dimension "h," of the upper guide member 21a disposed in the upper position with respect to the air flow. Therefore, it is possible to improve the air intake balance between near and far sides in the air discharger 13 with respect to the support 20.

According to the present embodiment, the air deflection guide 21 is integrally formed with the vertical-plate guide member 21d extending across the guide members 21a, 21b, and 21c. Accordingly, the flow rate of the deflected air flow is balanced in the widthwise directions (leftward-rightward directions) of the air deflection guide 21. The vertical-plate guide member 21d is effective to reinforce the air deflection guide 21 and the support 20.

The embodiment of the present invention has been described above. However, the present invention is not limited to the above embodiment, but changes and modifications may be made therein.

For example, while the air deflection guide is arranged to project from the upstream end surface of the support in the above embodiment, the foreign matter remover may be disposed upstream and may be arranged to project downstream.

In the above embodiment, the air deflection guide 21 has the three juxtaposed guide members 21a, 21b, and 21c. However, the air deflection guide may have four or more guide members. The above embodiment has been described above with respect to the four-cylinder internal combustion engine. However, the present invention is not limited to such engine.

While the motorcycle has been described in the above embodiment, the present invention may be applied to other saddle-type vehicles.

### Description of Reference Numerals

- 1: Motorcycle (saddle-type vehicle)
- 11: Air cleaner case
- 10: Air cleaner device
- 12: Air introducer
- 13: Air discharger
- 13a: Funnel
- 15: Air inlet channel
- 20: Support
- 21: Air deflection guide
- 21a: Upper guide member (guide member)
- 21b: Central guide member (guide member)
- 21c: Lower guide member (guide member)
- 20r: Downstream end surface (one-side end surface)
- 20f: Upstream end surface (other-side end surface)
- 21d: Vertical-plate guide member
- 30: Foreign matter remover
- AF: Air flow path

## Claims

1. An air cleaner device for an engine of a saddle-type vehicle, the air cleaner device (10) comprising:
an air cleaner case (11) provided with an air introducer (12), and an air discharger (13) disposed in a lower portion of the air cleaner case (11); and
a foreign matter remover (30) disposed in the air cleaner case (11) for removing foreign matter from air in an air flow path (AF) that extends from the air introducer (12) to the air discharger (13);
the air cleaner case (11) housing therein a support (20) supporting the foreign matter remover (30),
the support (20) being integrally formed with an air deflection guide (21) that extends in the air flow path (AF) for deflecting the direction of an air flow,
the air deflection guide (21) including an upper guide member (21a), a central guide member (21b) and a lower guide member (21c), the guide members (21a, 21b, 21c) being of a plate-like shape extending across the air flow path (AF) and lying substantially parallel to each other, with adjacent ones of the guide members (21a, 21b, 21c) spaced from each other by substantially the same distances, the guide members (21a, 21b, 21c) being further juxtaposed obliquely vertically as viewed in side elevation and being inclined in such a direction that a downstream of the guide members (21a, 21b, 21c) is directed away from the air discharger (13) as viewed in side elevation,
**characterised in that**
the overall length (S2) of the central guide member (21b) disposed in a lower position is shorter than the overall length (S1) of the upper guide member (21a) disposed in an uppermost position, and the overall length (S3) of the lower guide member (21c) disposed below the central guide member (21b) is further shorter than the overall length (S2) of the central guide member (21b).

2. The air cleaner device (10) according to claim 1, **characterised in that** the foreign matter remover (30) is disposed on a one-side end surface (20r) of the support (20) with respect to the direction of the air flow; and
the air deflection guide (21) extends from the one-side end surface (20r) and projects from other-side end surface (20f) of the support (20), as viewed in side elevation.

3. The air cleaner device (10) according to any one of claims 1-2, **characterised in that**
one of the guide members (21b) disposed in a lower position has an end near the foreign matter remover (30), the end being offset upstream of another of guide members (21a) disposed in an upper position with respect to the air flow.

4. The air cleaner device (10) according to claim 3, **characterised in that** the air deflection guide (21) is integrally formed with a vertical-plate guide member (21d) extending across the guide members (21a, 21b, 21c).

## Patentansprüche

1. Luftreinigungsvorrichtung für einen Motor eines Fahrzeugs vom Satteltyp, wobei die Luftreinigungsvorrichtung (10) umfasst:
ein Luftreinigungsgehäuse (11), das mit einer Lufteinführeinrichtung (12) und einer Luftaustragseinrichtung (13), die in einem unteren Abschnittt des Luftreinigungsgehäuses (11) angeordnet ist, bereitgestellt wird; und
eine Einrichtung zum Entfernen von Fremdstoffen (30), die in dem Luftreinigungsgehäuse (11) angeordnet ist, um Fremdstoffe aus der Luft in einem Luftströmungspfad (AF) zu entfernen, der sich von der Lufteinführeinrichtung (12) zur Luftaustragseinrichtung (13) erstreckt;
wobei das Luftreinigungsgehäuse (11) darin eine Stütze (20) aufnimmt, die die Einrichtung zum Entfernen von Fremdstoffen (30) stützt,
wobei die Stütze (20) in einem Stück mit einer Luftumlenkführung (21) gebildet wird, die sich in dem Luftströmungspfad (AF) erstreckt, um die Richtung einer Luftströmung umzulenken,
wobei die Luftumlenkführung (21) ein oberes Führungselement (21a), ein mittleres Führungselement (21b) und ein unteres Führungselement (21c) einschließt, wobei die Führungselemente (21a, 21b, 21c) in einer plattenartigen Form sind, sich quer durch den Luftströmungspfad (AF) erstrecken, und im Wesentlichen parallel zueinander liegen, wobei jeweils aneinander angrenzende der Führungselemente (21a, 21b, 21c) um im Wesentlichen dieselben Distanzen voneinander besabstandet sind, wobei die Führungselemente (21a, 21b, 21c) weiter, wie in der Seitenansicht dargestellt, vertikal schräg nebeneinander angeordnet sind, und in eine solche Richtung geneigt sind, dass ein Abwärtsstrom der Führungselemente (21a, 21b, 21c), wie in der Seitenansicht dargestellt, von der Luftaustragseinrichtung (13) weg gerichtet ist,
**dadurch gekennzeichnet, dass**
die Gesamtlänge (S2) des mittleren Führungselements (21b), das in einer unteren Position angeordnet ist, geringer ist, als die Gesamtlänge (S1) des oberen Führungselements (21a), das in einer obersten Position angeordnet ist, und die Gesamtlänge (S3) des unteren Führungselements (21c), das unter dem mittleren Führungselement (21b) angeordnet ist, noch geringer ist, als die Gesamtlänge (S2) des mittleren Führungselements (21b).

2. Luftreinigungsvorrichtung (10) nach Anspruch 1, **dadurch gekennzeichnet, dass** die Einrichtung zum Entfernen von Fremdstoffen (30) an einer Endfläche (20r) auf der einen Seite der Stütze (20) im Verhältnis zur Richtung der Luftströmung angeordnet ist; und
sich die Luftumlenkführung (21) aus der Endfläche (20r) auf der einen Seite erstreckt und, wie in der Seitenansicht dargestellt, aus der Endfläche (20f) auf der anderen Seite der Stütze (20) herausragt.

3. Luftreinigungsvorrichtung (10) nach einem der Ansprüche 1 bis 2, **dadurch gekennzeichnet, dass**
eines der Führungselemente (21b), das in einer unteren Position angeordnet ist, ein Ende nahe der Einrichtung zum Entfernen von Fremdstoffen (30) aufweist, wobei das Ende stromaufwärts eines anderen der Führungselemente (21a) versetzt ist, das im Verhältnis zur Luftströmung in einer oberen Position angeordnet ist.

4. Luftreinigungsvorrichtung (10) nach Anspruch 3, **dadurch gekennzeichnet, dass** die Luftumlenkführung (21) in einem Stück mit einem senkrechten Führungselement (21d) gebildet wird, das sich quer durch die Führungselemente (21a, 21b, 21c) erstreckt.

## Revendications

1. Dispositif de purification d'air pour un moteur d'un véhicule de type à enfourcher, le dispositif de purification d'air (10) comprenant :
un boîtier du purificateur d'air (11) doté d'un introducteur d'air (12) et d'un évacuateur d'air (13) disposés dans une partie inférieure du boîtier du purificateur d'air (11) ; et
un éliminateur de matière étrangère (30) disposé dans le boîtier du purificateur d'air (11) pour enlever une matière étrangère à partir de l'air dans un chemin de flux d'air (AF) qui s'étend depuis l'introducteur d'air (12) jusqu'à l'évacuateur d'air (13) ;
le boîtier du purificateur d'air (11) abritant un support (20) supportant l'éliminateur de matière étrangère (30),
le support (20) formant un seul tenant avec un guide de déflexion d'air (21) qui s'étend dans le chemin de flux d'air (AF) pour défléchir la direction d'un flux d'air,
le guide de déflexion d'air (21) incluant un élément de guide supérieur (21a), un élément de guide central (21b) et un élément de guide inférieur (21c), les éléments de guide (21a, 21b, 21c) ayant une forme de type plaque s'étendant à travers le chemin de flux d'air (AF) et étant disposés essentiellement parallèles entre eux, ceux des éléments de guide (21a, 21b, 21c) qui sont adjacents étant espacés entre eux essentiellement des mêmes distances, les éléments de guide (21a, 21b, 21c) étant en outre juxtaposés en oblique verticalement vu en élévation latérale et étant inclinés dans une direction telle qu'un aval des éléments de guide (21a, 21b, 21c) s'écarte de l'évacuateur d'air (13) vu en élévation latérale,
**caractérisé en ce que**
la longueur globale (S2) de l'élément de guide central (21b) disposé dans une position inférieure est plus courte que la longueur globale (S1) de l'élément de guide supérieur (21a) disposé dans une position la plus élevée, et la longueur globale (S3) de l'élément de guide inférieur (21c) disposé en dessous de l'élément de guide central (21b) est en outre plus courte que la longueur globale (S2) de l'élément de guide central (21b).

2. Dispositif de purification d'air (10) selon la revendication 1, **caractérisé en ce que** l'éliminateur de matière étrangère (30) est disposé sur une surface terminale sur un côté (20r) du support (20) par rapport à la direction du flux d'air ; et
le guide de déflexion d'air (21) s'étend depuis la surface terminale sur un côté (20r) et ressort de la surface terminale de l'autre côté (20f) du support (20), vu en élévation latérale.

3. Dispositif de purification d'air (10) selon l'une quelconque des revendications 1-2, **caractérisé en ce que**
l'un des éléments de guide (21b) disposé dans une position inférieure a une extrémité proche de l'éliminateur de matière étrangère (30), l'extrémité étant décalée en amont d'un autre des éléments de guide (21a) disposé dans une position supérieure par rapport au flux d'air.

4. Dispositif de purification d'air (10) selon la revendication 3, **caractérisé en ce que** le guide de déflexion d'air (21) forme un seul tenant avec un élément de guide à plaque verticale (21d) s'étendant à travers les éléments de guide (21a, 21b, 21c).
